# EUROPEAN PATENT SPECIFICATION

(11) **EP 1 495 617 B1**
(45) Date of publication and mention of the grant of the patent: **24.01.2007**
(21) Application number: 03722480.5
(22) Date of filing: 11.04.2003
(51) Int. Cl.: H04L 29/06, G08B 25/01, H04M 11/04, G08B 15/00

(54) **LOCATION-BASED REMOTE MONITORING**
POSITIONABHÄNGIGE FERNÜBERWACHUNG
SURVEILLANCE A DISTANCE FONDEE SUR LA POSITION

(30) Priority: 11.04.2002 US 120627
(43) Date of publication of application: 12.01.2005
(73) Proprietor: Accenture Global Services GmbH, 8200 Schaffhausen (CH)
(72) Inventor: WAN, Dadong, Palatine, IL 60067 (US); GERSHMAN, Anatole, V., Chicago, IL 60657 (US); RAO, Krishna, Chicago, IL 60622 (US)
(74) Representative: Beresford, Keith Denis Lewis
(86) International application number: PCT/EP2003/003918
(87) International publication number: WO 2003/085926

(56) References cited:
- WO-A-00/11858
- US-A1- 2002 005 894
- US-A1- 2002 076 003

## Description

### FIELD OF THE INVENTION

The present invention relates to a technique for remote monitoring and, in particular, to a technique for remote monitoring based on location of a mobile wireless device and environmental sensors proximate to the location of the mobile wireless device.

### BACKGROUND OF THE INVENTION

In today's society, the desire for improved security continues to grow, not only on an organizational level (as in the case, for example, of building or airport security) but also on a personal level. Various techniques currently exist for providing personal security, including personal escorts or so-called "bodyguards." Personal escorts of this type are typically used by high-profile individuals who may be the subject of specific security risks, e.g., corporate executives or celebrities are, in some countries, often the target of kidnapping attempts or personal threats. While personal escorts are an effective means of responding to known or suspected security threats, they are a relatively expensive solution. As such, other types of individuals are typically unable to avail themselves of such protection, nor would they be inclined to incur such an expense given the lack of a specific security risk.

Other means for providing personal security are known in the art. For example, so-called "panic" devices are available that allow a user to activate a beacon or wireless communication device, thereby notifying security personnel of an emergency situation. Such devices are, in some instances, able to provide location information of the device itself (and, presumably, a user of the device) or allow such location information to be determined by security personnel such that aid may be directed in accordance with the location information. Such devices, however, do not provide the sense that one is being escorted. Indeed, it is up to the individual carrying the device to recognize the security threat and respond accordingly. At the opposite end of the spectrum, security cameras typically found around buildings or public areas allow security personnel to monitor relatively large areas and, by chance, individuals who may pass through such areas. However, such monitoring is not tailored to any one individual in the sense of a personal escort and, often, the security personnel performing such monitoring are unable to communicate with individuals being monitored.

Therefore, it would be advantageous to provide a technique that allows individuals to be effectively escorted without incurring the substantial expense typically resulting from personal escorts.

WO 00/11858 discloses a device for personal safety which comprises an emitter/receiver that can operate by satellite, the internet or a mobile phone and which can communicate with a data monitoring and control centre. The device includes a microcamera, an earphone and a microphone so that the user can communicate with the data monitoring and control centre and the data monitoring and control centre can analyse images from the microcamera in order to assist the user. The position of the user can be located by satellite (GPS) or by other means.

US 2002/0005894A1 discloses a system for detecting an event within premises such as a break-in or fire, and providing data such as live or recorded video to a website which may be accessed by authorised users such as a manager of the premises, a central monitor or emergency services. The authorised users can view the event as recorded or in real time in order to determine appropriate action.

### BRIEF SUMMARY OF THE INVENTION

The present invention provides a technique for monitoring a mobile wireless device and, by implication, a user of the mobile wireless device, to thereby provide a virtual personal escort presence. To this end, the present invention employs a mobile wireless device that is capable of providing, or enabling the determination of, location-related information.

This is achieved by a system according to claim 1, two apparatuses according to claims 10 and 17 and two methods according to claims 24 and 30.

### BRIEF DESCRIPTION OF THE DRAWINGS

The present invention is illustrated by way of example and not limited in the accompanying FIGS. in which like reference numerals indicate similar elements and in which:
FIG. 1 is a block diagram of a system in accordance with an embodiment of the present invention;
FIG. 2 is a block diagram of a mobile wireless device in accordance with an embodiment of the present invention;
FIG. 3 is a block diagram of a remote monitoring position in accordance with an embodiment of the present invention;
FIG. 4 is a flowchart illustrating service processing in accordance with an embodiment of the present invention;
FIG. 5 is a more detailed flowchart illustrating processing in accordance with an embodiment of the present invention;
FIG. 6 is a flowchart illustrating operation of a mobile wireless device in accordance with an embodiment of the present invention; and
FIG. 7 is a flowchart illustrating operation of a remote monitoring position in accordance with an embodiment of the present invention.

### DETAILED DESCRIPTION OF THE INVENTION

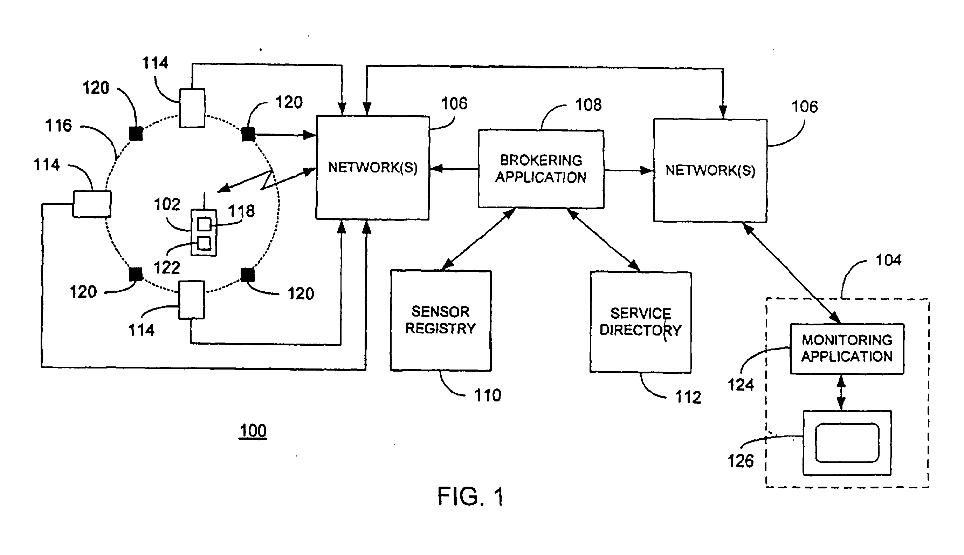

The present invention may be more readily described with reference to FIGS. 1-7. FIG. 1 illustrates a system 100 in accordance with an embodiment of the present invention. The system 100 comprises at least one mobile wireless device 102 and at least one remote monitoring position 104 (only one of each shown for clarity) capable of communicating with each other via one or more communication networks 106.

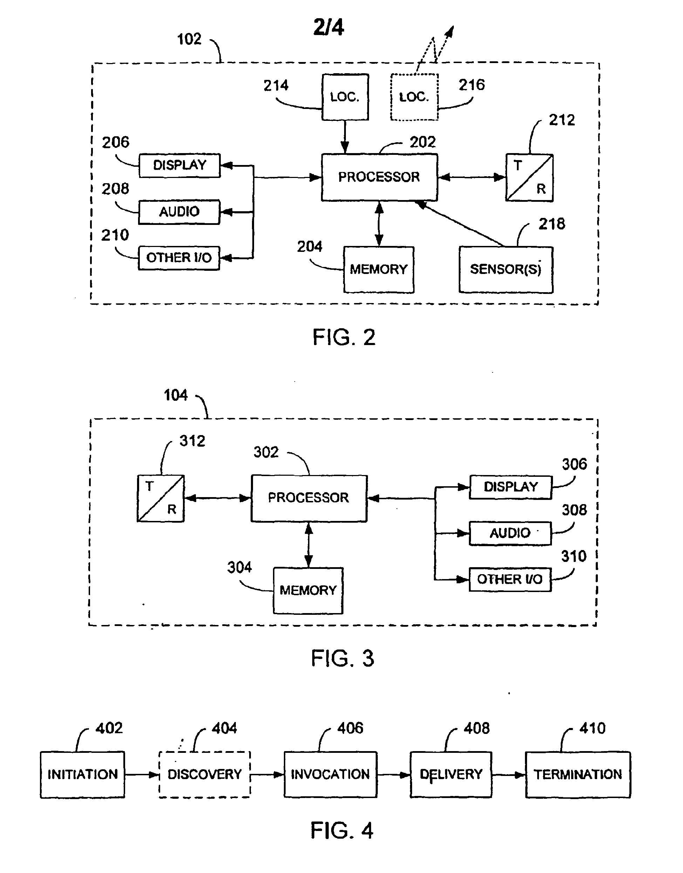

The mobile wireless device 102 (illustrated in greater detail in FIG. 2) may comprise any processor-based device capable of at least one-way wireless, and preferably two-way wireless, communication and capable of providing, or enabling the determination of, location-related information. For example, the mobile wireless device 102 may comprise a cellular telephone, personal digital assistant, portable computer or any similar device or combination thereof. In order to provide location-related information, the mobile wireless device 102 may comprise one or more components 118 capable of directly determining such information, e.g., a Global Positioning Satellite (GPS) receiver. In this manner, the mobile wireless device is capable of providing location information (e.g., latitude and longitude coordinates) as the location-related information directly. Alternatively, the device 102 may comprise elements 118 that allow the location information to be determined by another component. For example, a fixed positioning system 120, such as an in-building infra-red (IR) tracking system, within a region 116 proximate a location of the mobile wireless device 102 may be used to receive transmitted or reflected signals sent by the mobile wireless device 102 through a suitable IR element 118. Other positioning or tracking technologies include the so-called IEEE 802.11 standard (for both wireless communication and location tracking) and radio frequency identification (RFID) systems. The positioning system 120 thereafter determines suitable location information which may be obtained via the network(s) 106.

The remote monitoring position 104 comprises a monitoring application 124 and, in a preferred embodiment, a display device 126 capable of displaying images captured by a suitable environmental sensor (e.g., a full-motion video or still camera, or even webcams). As described in greater detail below, the monitoring application 124 preferably comprises software routines executed by a suitable processor-based platform implementing a service offered by a service provider. Information regarding such service and service provider can be listed in a service directory 112 along with information regarding other services provided by other service providers. A more detailed illustration of the remote monitoring position 104 is provided below with reference to FIG. 3.

The remote monitoring position 104, via the monitoring application 124, can receive environmental information from one or more environmental sensors 114 via the network(s) 106. The particular sensors used in any given situation is necessarily dependent upon the location of the mobile wireless device being monitored. Thus, a sensor registry 110 is provided which lists a plurality of environmental sensors indexed, at least in part, based upon the geographic location of each sensor. In a preferred embodiment, additional information regarding each sensor is also stored in the sensor registry 110, which additional information allows the remote monitoring position 104 to determine which sensors are suitable for use. For example, such additional information may include information regarding the capabilities of each sensor, particular protocols adhered to by each sensor, whether a fee is charged for usage of the sensor, etc. In one embodiment of the present invention, it is anticipated that entities (e.g., businesses, local governmental agencies, etc.) in possession of suitable environmental sensors (e.g., video cameras, etc.) may desire to make some or all of the environmental information (e.g., video streams, etc.) provided by their sensors available to others for a fee. To this end, such entities would be willing to populate the sensor registry 110 (which may be implemented as a suitable configured web server or the like) with the necessary information such that service providers can access their sensors.

As alluded to above, the environmental sensors 114 may comprise any type of sensor device capable of providing environmental data about a particular area with which they are associated. A primary example of such sensors are video or still cameras of the type commonly used in current surveillance systems given their relative ubiquity. Additionally, the use of video cameras and the like is attractive from the security point of view because they convey a substantial quantity of information that would be useful in identifying security risks. However, the present invention is not limited to image-based sensors. For example, sensors capable of monitoring various other environmental variables, such as heat, sound, moisture, air quality, vibration, radiation, etc. may be equally employed as a matter of design choice and the present invention is not limited in this regard. It should be further noted that the mobile wireless device 102 may itself comprise an environmental sensor 122, the use of which is described in greater detail below.

In one embodiment of the present invention, access to the sensor registry 110 and service directory 112 is controlled by a brokering application 108. Implemented as software routines executed by a suitable processor-based platform, the brokering application 108 acts as a central point whereby entities seeking monitoring services may obtain information about such services. It also directs traffic and provides such administrative functions like metering, payment, security, and quality assurance. To this end, the brokering application 108 obtains suitable information from the service directory 112 in response to request for service. Likewise, service providers are put in touch with potential recipients of their services, and provided access to the relevant sensor registries 110, by the brokering application 108. However, an implementation could be provided in which the brokering application 108 is not required. In this instance, the sensor registry 110 and service directly 112 would be directly accessible to the relevant parties via the network(s) 106.

As shown, the network(s) 106 provide communication paths between the various elements illustrated in FIG. 1. The network(s) 106 may comprise any private network, such as a local area network (LAN) or wide area network (WAN) provided by a private organization, a publicly-accessible network such as the so-called Internet or World Wide Web, or combinations of such private and public networks. As a result of the network(s) 106, the remote monitoring position 104 may, in fact, be quite remote relative to any given mobile wireless device 102 that it is servicing. For example, given the capability to transmit and receive streaming video and/or audio over public networks, it may be possible to locate the remote monitoring position 104 in different countries relative to those where its monitoring service is provided. Further still, the networks(s) 106 is not limited to wired communication resources, but also includes those elements necessary to enable wireless communications, for example, cellular radio networks providing gateway access to other wired networks. In this manner, the mobile wireless device 102 is able to communicate with the remote monitoring position 104.

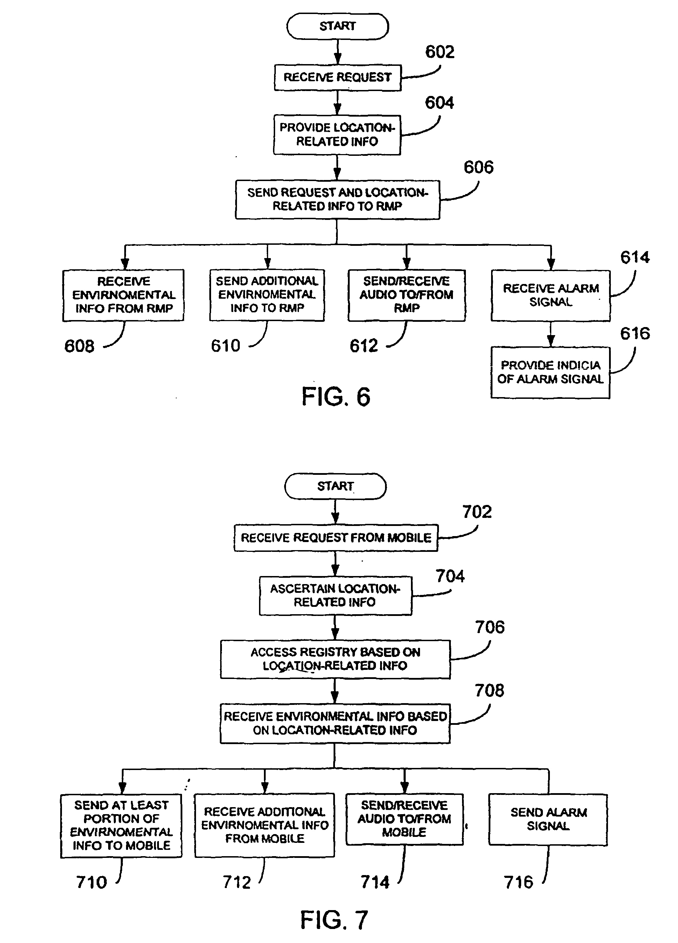

Referring now to FIG. 2, a more detailed illustration of a mobile wireless device 102 in accordance with an embodiment of the present invention is provided. In particular, the mobile wireless device 102 comprises a processor 202, such as a microprocessor, microcontroller, digital signal processor, etc. or combinations thereof, coupled to memory 204, which may comprise any combination of volatile and/or non-volatile digital storage devices such as random access memory (RAM), read only memory (ROM), hard drives, optical disks, etc. The memory 204 preferably has stored thereon software routines and the like in the form of instructions that are executable by the processor 202, which software routines implement the functionality described herein. Together, the processor 202 and memory 204 control the overall operation of the mobile wireless device. In particular, the processor 202 and memory 204 implement an application that synchronizes various communication channels with the brokering application and the monitoring application implemented by the remote monitoring position. Operation of such an is further described below with reference to FIG. 6.

Preferably, a display device 206, audio interface 208 and other input/output devices 210 are provided as shown. The display device 206 may comprise any suitable display screen for use in a mobile environment, such as those commonly found in PDAs or portable computers. The audio interface 208 comprises at least an audio output device, such as a speaker or annunciator, such that audio information can be provided to a user of the mobile wireless device 102. Additionally, a microphone may be provided as part of the audio interface 208 for the purpose of providing voice communications through the mobile wireless device. The other input/output devices 210 may comprises touch-screens, keyboards, keypads, buttons, lights, etc. that allow user input to be received and other forms of output to be provided to the users. In particular, the other input/output devices may be used to provide an alarm signal to be sent by the mobile wireless device to a remote monitoring position.

A wireless interface 212 is also provided to enable wireless communications, particularly with at least some portion of the network(s) 106. For example, the wireless interface 212 may comprise a cellular transceiver or a so-called Bluetooth transceiver or an IEEE 802.11 transceiver. The present invention is not limited with regard to the particular technology providing wireless communications. In general, however, the wireless interface 212 enable environmental information to be received or sent by the mobile wireless device 102 and, in a preferred embodiment, to transceive audio information as well.

As mentioned above, a location-determining device 214, such as a GPS receiver or a location-enabling device 216, such as an IR transmitter, IEEE 802.11 card, RFID tag, or other active device, is provided in each mobile wireless device 102. In this manner, each mobile wireless device 102 may either provide location-related information directly (as in the case of GPS latitude-longitude coordinates) or allow another system to determine the location-related information (as in the case of transmitted signals picked up by a tracking system).

Finally, one or more sensors 218 may be provided which sensors are capable of providing environmental data relative to the exact location of the mobile wireless device 102. Again, any type of sensor may be employed for this purpose as a matter of design choice.

Referring now to FIG. 3, a more detailed illustration of a remote monitoring position 104 in accordance with an embodiment of the present invention is provided. In particular, the remote monitoring position 104 comprises a processor 302, such as a microprocessor, microcontroller, digital signal processor, etc. or combinations thereof, coupled to memory 304, which may comprise any combination of volatile and/or non-volatile digital storage devices such as random access memory (RAM), read only memory (ROM), hard drives, optical disks, etc. The memory 304 preferably has stored thereon software routines and the like in the form of instructions that are executable by the processor 302, which software routines implement the functionality described herein, including the monitoring application 124. Together, the processor 302 and memory 304 control the overall operation of the remote monitoring position.

As in the case of the mobile wireless device 102, the remote monitoring position 104 is similarly equipped with a suitable display device 306, an audio interface 308 and other input/output devices 310. In particular, the other input/output devices 310 may be used to transmit an alarm signal to a mobile wireless device. Additionally, in a preferred embodiment, multiple display devices are provided to show multiple views of the same geographical areas.

A network interface 312 is provided to support communication between the network(s) 106 and the remote monitoring position 104. As a result, the particular form of the network interface 312 will depend on the type of network(s) 106 with which it must communicate.

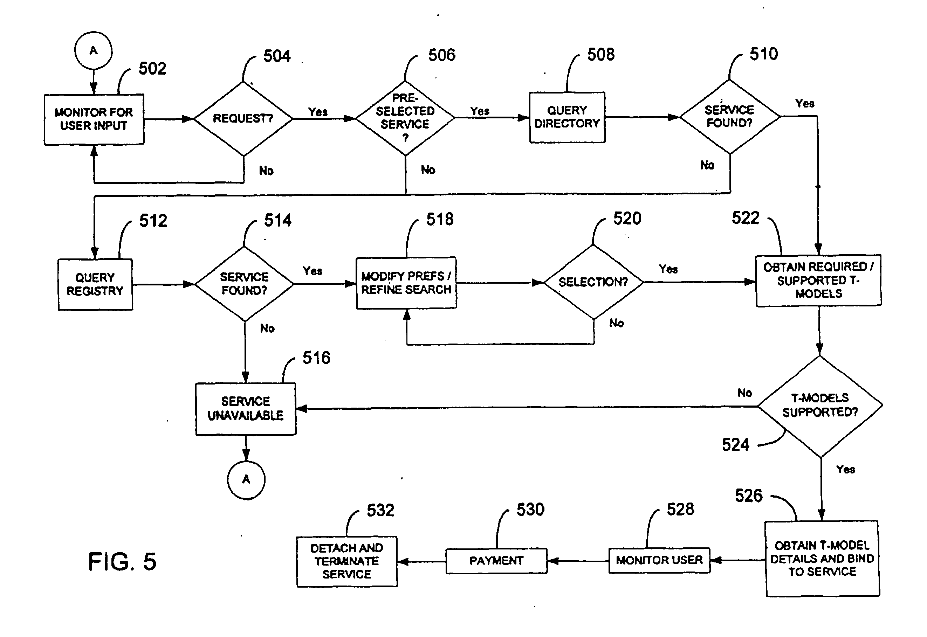

Referring now to FIG. 4, a generalized process for providing services in accordance with the present invention is illustrated. In particular, monitoring service provision is characterized by the four steps (and one optional step) illustrated in FIG. 4. At step 402, a monitoring service is initiated in the sense that a request for such a service is made. If such a service is not already known to be available, service discovery 404 may be performed to identify a suitable service. Assuming a suitable monitoring service is available, the monitoring service is invoked at step 406 and the actual monitoring service is delivered at step 408. Upon completion of the monitoring service, termination procedures 410 are performed. FIG. 5 illustrates a more detailed flowchart of one embodiment of the processing shown in FIG. 4.

At step 502, continuous monitoring of user input to a mobile wireless device is performed. At step 504, it is determined whether a request for remote monitoring has been initiated by a user of a mobile wireless device. The request can be provided, for example, through a voice interface or a simple push-button interface. In practice, voice recognition is accomplished using an engine such as ViaVoice by IBM. A voice recognition engine of this type can be used to recognize words during free-flow dictation or it can use grammar files with pre-defined query patterns in order to recognize simple commands.

At step 506, whether a monitoring service provider is already known and specified, e.g., in the user's preferences. If such a service has already been selected, processing can continue at step 508 where the invocation process begins, as described below. If such a service has not been previously determined, then a service provider must be dynamically discovered beginning at step 512.

At step 512, the service directory is queried by the mobile wireless device via the brokering application to find one or more appropriate services. In a presently preferred embodiment, such searches are performed on a directory that is compliant with the so-called Universal Description, Discovery and Integration (UDDI) initiative. The brokering application first selects a directory operator site to search. A UDDI-compliant directory allows businesses to list themselves along with services they provide. They can also list the technical blueprints (t-models) explaining how to bind to and invoke their services. Currently, public sites are hosted by Microsoft, IBM, and Hewlett-Packard without charge for listing or searching. Searches are performed using Extensible Markup Language (XML)/Simple Object Access Protocol (SOAP)-based query patterns and protocols specified in the UDDI 2.0 API specification. For example, the Microsoft UDDI software developer kit provides class wrappers for the XML/SOAP queries and responses and, in a preferred embodiment, is used to make these calls.

When searching for keywords, the brokering application can look at both names and taxonomies (categorizations) of both businesses and the services they provide, and can also search descriptions thereof As applied to the instant invention, for example, the brokering application would look first at businesses categorized under "security" and then by their descriptions try to match them with other criteria from the user's preferences and location, such as coverage, price, etc.

When and if services matching the keyword(s) have been identified, at step 514, the brokering application sends information regarding the identified services to the mobile wireless device so that the user can choose to re-query using new/modified search parameters, at step 518, or choose to select one of the services at step 520.

If, at step 506, a particular service had been previously determined, processing continues at step 508 where the service directory is queried in order to find the service, i.e., how to contact the service provider. If the service is not available despite the information provided by the service directory, the service directory may be re-queried at step 512 as described above.

Regardless of the manner in which a service has been chosen, the mobile wireless device, via the brokering application, has to decide if it can bind to the selected service. In a presently preferred embodiment, this is accomplished by performing an XML/SOAP query, at step 522, that returns a list of the so-called t-models that designate how to bind to the service. When a user initiates a service request, it tells the brokering application what technical capabilities it supports (by way of a user profile which the brokering application can access). When the search results comes back, the brokering application compares the t-model information with the user profile. If the t-model(s) required are not supported by the user or mobile wireless device at step 524, then the user of the mobile wireless device is informed that the monitoring service is unavailable at step 516 therefore requiring further user interaction such that another choice can be made. If the t-model(s) specified are supported by the mobile device, then the brokering application gets the details of the service provider's particular implementation of them. At step 526, it then uses this information to bind the mobile wireless device to the monitoring service and begin the transaction.

Generally, t-models have unique identification numbers (UUIDs) and can be created by anyone registered with a UDDI server. A company could create t-models for its services, but it is far more useful to provide its own implementations of already extant, standardized t-models. This facilitates automatic invocation as the software on the mobile wireless device can be written with standard t-models in mind. Furthermore, supported t-models can include protocols, client software, and client hardware. For example, if a service provider wanted to provide a service through Microsoft NetMeeting, then it declares support for a standard t-model for binding using NetMeeting protocols and then describes its own instance of that t-model (the IP address to call, the type of call, camera/microphone required, etc.).

At step 528, the monitoring service begins monitoring of the mobile wireless device based on location-related information ascertained by the service provider (i.e., at the remote monitoring position). Delivery of the service is further described with reference to FIGs. 6 and 7 below. Once the service has been provided, payment takes place, at step 530, and is either automated through use of payment t-models (transmit credit card info, use internet payment service, etc.) along with a stored, local profile or is otherwise taken care of by interaction with the service provider. Thereafter, upon determining that the monitoring service is no longer needed, the user of the mobile wireless device, or the mobile wireless device itself, terminates the connection to the service provider in a manner consistent with the t-model specifications (hanging up the call, turning off the camera, etc.) and returns to its resting state (monitoring the audio stream for user interaction).

Referring now to FIG. 6, operation of a mobile wireless device in accordance with an embodiment of the present invention is further described. At block 602, the mobile wireless device receives a request for monitoring services via one of the available user input modalities, e.g., menu selection, button activation, voice recognition, etc. Additionally, at block 604, location-related information as described above is provided by the mobile wireless device, i.e., either directly or indirectly through another system. Regardless, the request and location-related information are provided to a monitoring service provider (as identified by the process described above relative to FIG. 5) at a remote monitoring position.

Assuming the necessary steps to allow the mobile wireless device to bind to the service provider have taken place, a variety of actions may take place. For example, the mobile wireless device may receive environmental information from the remote monitoring position, at block 608, which environmental information may be provided to a user of the mobile wireless device. Where the mobile wireless device is equipped with one or more additional environmental sensors itself, the mobile wireless device may provide additional environmental information, supplied by the additional environmental sensor(s), to the remote monitoring position at block 610. This may be useful in allowing the personnel at the remote monitoring position to understand the conditions currently being experienced by the user of the mobile wireless device.

As an enhanced level of service, audio information may be received from or sent to the remote monitoring position by the mobile wireless device, as indicated by block 612. In this manner, a user of the mobile wireless device may receive commentary from the monitoring personnel regarding the particular environmental conditions being monitored. Conversely, the existence of a reverse audio channel allows the monitoring personnel judge, for example, the relative comfort of the user of the mobile wireless device.

Further still, in the course of monitoring the environmental information provided to the remote monitoring position, the monitoring personnel may detect a situation or conditions that represent a potential security risk to the user of the mobile wireless device. To warn the user of this, the remote monitoring position can be operated to cause an alarm signal to be sent to the mobile wireless device, which signal is received at block 614. Thereafter, an indicia of the alarm signal is provided to the user of the mobile wireless device. The particular form of indicia used is a matter of design choice. For example, a simple approach may cause an light to flash or an annunciator (e.g., a buzzer or bell) to activate. In more complex implementations, the alarm signal may comprise a "canned" speech signal warning the user of the situation. Regardless of the implementation used, the alarm signal allows the monitoring personnel to interact with the user of the mobile wireless device in a manner previously unavailable.

Referring now to FIG. 7, operation of a remote monitoring position in accordance with an embodiment of the present invention is further described. In many respects, the operations illustrated in FIG. 7 are the compliment of those illustrated in FIG. 6. At block 702, the remote monitoring position receives the request for monitoring services from the mobile wireless device. Assuming the mobile wireless device is successfully able to bind to the monitoring service, the remote monitoring position ascertains the location-related information regarding the mobile wireless device at block 704. Where the mobile wireless device determines location information directly, this block is little more than a step of receiving the location information from the mobile wireless device. Conversely, where the mobile wireless device does not directly determine such information, but rather merely enables it to be determined by other systems, block 704 may require the remote monitoring position to actively seek the location-related information, for example, by polling a tracking system.

Regardless of the manner in which the remote monitoring position obtains the location-related information, it accesses a sensor registry, at block 706, to identify suitable environmental sensors based on the location-related information. Note that, in practice, this will be a continuous process as the mobile wireless device will most likely move, resulting in a stream of updated location-related information. As suitable environmental sensors are selected, the remote monitoring position receives, at step 708, environmental information from the selected environmental sensors.

Thereafter, a variety of actions may take place. At block 710, the remote monitoring position may provide at least a portion of the environmental information to the mobile wireless device. For example, where the environmental information comprises video images, the remote monitoring position can send video data corresponding to regions ahead of the mobile wireless device's current location (assuming a trajectory for the mobile wireless device can be determined) as well as regions behind the mobile wireless device's current location (again, assuming a trajectory can be determined). One embodiment of such "look-ahead" operation is to allow the user to inform the remote monitoring position that he/she is heading from Point A to Point B. Thereafter, the remote monitoring position can monitor the entire route or portions of the route to make sure it is safe to proceed. If not, the remote monitoring position can suggest an alternate route.

Where the mobile wireless device is equipped with one or more additional environmental sensors, the remote monitoring position may receive additional environmental information from the mobile wireless device at block 712. Additionally, as previously described, the remote monitoring position may transceive audio information with the mobile wireless device at block 714, or send an alarm signal to the Mobile wireless device at block 716.

The present invention provides a technique for remotely monitoring a mobile wireless device as a means of providing a virtual personal escort. Previously, such personal escorts were beyond the financial reach of most individuals. However, the present invention provides an economical means of providing such services. White the present invention has been described with respect to specific examples including presently preferred modes of carrying out the invention, those skilled in the an will appreciate that there arc numerous variations and permutations of the above described systems and techniques that fall within the appended claims.

## Claims

1. A system for providing remote monitoring, comprising:
at least one mobile wireless device (102), wherein location-related information can be determined for each mobile wireless device of the at least one mobile wireless device and sent with a request for remote monitoring to a remote monitoring position (104);
a remote monitoring position (104), in wireless communication with the at least one mobile wireless device, that ascertains the location-related information for a mobile wireless device of the at least one mobile wireless device; and
at least one environmental sensor (114),
**characterised in that** the at least one environmental sensor is a remote sensor that is coupled to, controlled by the remote monitoring position and selected based on the location-related information provided by the mobile wireless device, and provides, in response to a request from the remote monitoring position, environmental information regarding a region proximate to a location based on the location-related information.

2. The system of claim 1, wherein the remote monitoring position is coupled to the at least one environmental sensor via a communication network (106).

3. The system of claim 2, wherein the communication network (106) comprises either of a World Wide Web and an Internet.

4. The system of claim 1, wherein the at least one environmental sensor (114) comprises at least one camera.

5. The system of claim 1, wherein the mobile wireless device comprises an additional environmental sensor that wirelessly provides additional environmental information to the remote monitoring position.

6. The system of claim 5, wherein the additional environmental sensor comprises a camera.

7. The system of claim 1, wherein the mobile wireless device and the remote monitoring position communicate via at least one audio channel (208, 308).

8. The system of claim 1, wherein the remote monitoring position wirelessly provides at least a portion of the environmental information to the mobile wireless device.

9. The system of claim 1, further comprising:
a registry (110), coupled to the remote monitoring position, comprising information regarding each of the at least one environmental sensor,
wherein the remote monitoring position selects the at least one environmental sensor (114) based on the information regarding each of the at least one environmental sensor.

10. A mobile wireless device (102) for use in providing remote monitoring, comprising:
input means (210) for receiving, from a user of the mobile wireless device, a request for remote monitoring of the mobile wireless device;
means (214) for providing location-related information corresponding to the mobile wireless device; and
means, (212) coupled to the input means and the means for providing, for wirelessly sending the request for remote monitoring of the mobile wireless device and the location-related information to a remote monitoring position (104),
**characterised in that** the request is for remote monitoring of the mobile wireless device through at least one environmental sensor (114) controlled by the remote monitoring position and selected within a region proximate to a location based on the location-related information provided by the mobile wireless device.

11. The mobile wireless device of claim 10, further comprising:
means (218), coupled to the means for wirelessly sending, for determining additional environmental information,
wherein the means (212) for wirelessly sending sends the environmental information to the remote monitoring position.

12. The mobile wireless device of claim 11, wherein the means for determining the additional environmental information comprises a camera.

13. The mobile wireless device of claim 10, further comprising:
means (212) for wirelessly receiving, from the remote monitoring position, at least a portion of the environmental information; and
means, coupled to the means for wirelessly receiving, for providing the at least a portion of the environmental information to a user of the mobile wireless device.

14. The mobile wireless device of claim 13, wherein the means for wirelessly receiving further function to receive audio information from the remote monitoring position.

15. The mobile wireless device of claim 10, wherein the means for wirelessly receiving further function to receive an alarm signal from the remote monitoring position, and wherein the mobile wireless device further comprises:
output means (206, 208, 210), coupled to the means for wirelessly receiving, for providing indicia of the alarm signal to a user of the mobile wireless device.

16. The mobile wireless device of claim 10, wherein the means for wirelessly sending further function to send audio information to the remote monitoring position.

17. A remote monitoring position (104) for providing remote monitoring of a mobile wireless device (102), comprising:
first means (312) for receiving, from the mobile wireless device, a request for remote monitoring of the mobile wireless device; and
means for ascertaining location-related information of the mobile wireless device;
**characterised in that** the remote monitoring position includes second means for controlling at least one environmental sensor (114) within a region proximate to a location defined based on the location-related information and receiving environmental information therefrom; and
wherein the at least one environmental sensor is selected based on the location-related information.

18. The remote monitoring position of claim 17, which includes means for accessing, based on the request, a registry (110) comprising information regarding the at least one environmental sensor, and
the at least one environmental sensor is selected based on the information regarding the at least one environmental sensor.

19. The remote monitoring position of claim 17,
wherein the first means (308) for receiving further function to receive audio information from the mobile wireless device.

20. The remote monitoring position of claim 17, further comprising:
means (312) for sending at least a portion of the environmental information to the mobile wireless device.

21. The remote monitoring position of claim 17, further comprising:
means for sending audio information to the mobile wireless device.

22. The remote monitoring position of claim 17, further comprising:
a user interface, coupled to the second means for receiving, for providing the environmental information to a user of the remote monitoring position.

23. The remote monitoring position of claim 17, further comprising:
means for sending an alarm signal to the mobile wireless device.

24. A method for a mobile wireless device (102) for supporting remote monitoring of the mobile wireless device, the method comprising steps of:
receiving (602) from the user of the mobile wireless device a request for remote monitoring of the mobile wireless device;
providing (604) location-related information of the mobile wireless device; and
sending (606) the request and the location-related information to a remote monitoring position (104),
**characterised in that** the request is for remote monitoring by at least one environmental sensor (114)
controlled by the remote monitoring position (104) and selected within a region proximate to a location based or the location-related information provided by the mobile wireless device.

25. The method of claim 24, further comprising:
determining additional environmental information via an additional environmental sensor (218); and
sending (610) the additional environmental information to the remote monitoring position.

26. The method of claim 24, further comprising:
receiving (608), from the remote monitoring position, at least a portion of the environmental information; and
providing the at least a portion of the environmental information to a user of the mobile wireless device.

27. The method of claim 24, further comprising:
receiving (612) audio information from the remote monitoring position.

28. The method of claim 24, further comprising:
receiving (614) an alarm signal from the remote monitoring position; and
providing (616) indicia of the alarm signal to a user of the mobile wireless device.

29. The method of claim 24, further comprising:
sending (612) audio information to the remote monitoring position.

30. A method for a remote monitoring position (104) for providing remote monitoring of a mobile wireless device (102), the method comprising:
receiving (702), from the mobile wireless device, a request for remote monitoring of the mobile wireless device; and
ascertaining (704) location-related information of the mobile wireless device;
**characterised in that** the method includes selecting an environmental sensor (114) controlled by the remote monitoring position within a region proximate to the mobile wireless device; and
receiving, from the at least one environmental sensor, environmental information based on the location-related information.

31. The method of claim 30, further comprising:
accessing (706), based on the request, a registry (110) comprising information regarding the at least one environmental sensor,
wherein the at least one environmental sensor is selected based on the location-related information and the information regarding the at least one environmental sensor.

32. The method of claim 30, further comprising:
receiving (714) audio information from the mobile wireless device.

33. The method of claim 30, further comprising:
sending (710) at least a portion of the environmental information to the mobile wireless device.

34. The method of claim 30, further comprising:
sending (714) audio information to the mobile wireless device.

35. The method of claim 30, further comprising:
providing the environmental information to a user of the remote monitoring position.

36. The method of claim 30, further comprising:
sending (716) an alarm signal to the mobile wireless device.

## Patentansprüche

1. System zur Bereitstellung von Fernüberwachung, umfassend:
mindestens eine bewegliche drahtlose Vorrichtung (102), wobei positionsbezogene Informationen für jede bewegliche drahtlose Vorrichtung der mindestens einen beweglichen drahtlosen Vorrichtung bestimmbar und mit einem Ersuchen um Fernüberwachung an eine Fernüberwachungsstelle (104) sendbar sind,
eine Fernüberwachungsstelle (104) in drahtloser Datenübertragung mit mindestens einer beweglichen drahtlosen Vorrichtung, die die positionsbezogenen Informationen für eine bewegliche drahtlose Vorrichtung der mindestens einen beweglichen drahtlosen Vorrichtung feststellt, und
mindestens einen Umweltsensor (114), **dadurch gekennzeichnet, dass** der mindestens eine Umweltsensor ein Fernsensor ist, der mit der Fernüberwachungsstelle verbunden ist, von dieser gesteuert wird und auf Grundlage der von der beweglichen drahtlosen Vorrichtung bereitgestellten positionsbezogenen Informationen ausgewählt wird und in Reaktion auf ein Ersuchen von der Fernüberwachungsstelle auf Grundlage der positionsbezogenen Informationen Umweltinformationen bezüglich eines Gebiets in der Nähe der Position bereitstellt.

2. Das System nach Anspruch 1, wobei die Fernüberwachungsstelle über ein Datenübertragungsnetz (106) mit mindestens einem Umweltsensor verbunden ist.

3. Das System nach Anspruch 2, wobei das Datenübertragungsnetz (106) entweder ein weltweites Netz und ein Internet umfasst.

4. Das System nach Anspruch 1, wobei der mindestens eine Umweltsensor (114) mindestens eine Kamera umfasst.

5. Das System nach Anspruch 1, wobei die bewegliche drahtlose Vorrichtung einen zusätzlichen Umweltsensor umfasst, der drahtlos zusätzliche Umweltinformationen für die Fernüberwachungsstelle bereitstellt.

6. Das System nach Anspruch 5, wobei der zusätzliche Umweltsensor eine Kamera umfasst.

7. Das System nach Anspruch 1, wobei die bewegliche drahtlose Vorrichtung und die Fernüberwachungsstelle über mindestens einen Tonkanal (208, 308) Daten austauschen.

8. Das System nach Anspruch 1, wobei die Fernüberwachungsstelle der drahtlosen Vorrichtung mindestens einen Teil der Umweltinformationen drahtlos bereitstellt.

9. Das System nach Anspruch 1, ferner umfassend:
eine mit der Fernüberwachungsstelle verbundene Registrierung (110), die Informationen bezüglich jeden des mindestens einen Umweltsensors umfasst,
wobei die Fernüberwachungsstelle den mindestens einen Umweltsensor (114) auf Grundlage der Informationen bezüglich jeden des mindestens einen Umweltsensors auswählt.

10. Bewegliche drahtlose Vorrichtung (102) zur Verwendung für die Bereitstellung von Fernüberwachung, umfassend:
Eingabemittel (210) zum Empfangen eines Ersuchens um Fernüberwachung der beweglichen drahtlosen Vorrichtung von einem Nutzer der beweglichen drahtlosen Vorrichtung,
Mittel (214) zum Bereitstellen von positionsbezogenen Informationen, die der beweglichen drahtlosen Vorrichtung entsprechen, und
mit dem Eingabemittel und dem Mittel zum Bereitstellen verbundenes Mittel (212) zum drahtlosen Senden des Ersuchens um Fernüberwachung der beweglichen drahtlosen Vorrichtung und der positionsbezogenen Informationen an die Fernüberwachungsstelle (104),
**dadurch gekennzeichnet, dass** das Ersuchen einer Fernüberwachung der beweglichen drahtlosen Vorrichtung durch mindestens einen von der Fernüberwachungsstelle gesteuerten und innerhalb eines Gebiets in der Nähe der Position auf Grundlage der von der beweglichen drahtlosen Vorrichtung bereitgestellten positionsbezogenen Informationen ausgewählten Umweltsensor (114) gilt.

11. Die bewegliche drahtlose Vorrichtung nach Anspruch 10, ferner umfassend:
mit dem Mittel zum drahtlosen Senden verbundenes Mittel (218) zur Bestimmung zusätzlicher Umweltinformationen,
wobei das Mittel (212) zum drahtlosen Senden die Umweltinformationen an die Fernüberwachungsstelle sendet.

12. Die bewegliche drahtlose Vorrichtung nach Anspruch 11, wobei das Mittel zur Bestimmung der zusätzlichen Umweltinformationen eine Kamera umfasst.

13. Die bewegliche drahtlose Vorrichtung nach Anspruch 10, ferner umfassend:
Mittel (212) zum drahtlosen Empfangen zumindest eines Teils der Umweltinformationen von der Fernüberwachungsstelle und
mit dem Mittel zum drahtlosen Empfangen verbundenes Mittel zum Bereitstellen von zumindest einem Teil der Umweltinformationen für einen Benutzer der beweglichen drahtlosen Vorrichtung.

14. Die bewegliche drahtlose Vorrichtung nach Anspruch 13, wobei das Mittel zum drahtlosen Empfangen ferner arbeitet, um Toninformationen von der Fernüberwachungsstelle zu empfangen.

15. Die bewegliche drahtlose Vorrichtung nach Anspruch 10, wobei das Mittel zum drahtlosen Empfangen ferner arbeitet, um ein Alarmsignal von der Fernüberwachungsstelle zu empfangen, und wobei die bewegliche drahtlose Vorrichtung ferner umfasst:
mit dem Mittel zum drahtlosen Empfangen verbundene Ausgabemittel (206, 208, 210), zum Bereitstellen von Anzeigen des Alarmssignals für einen Benutzer der beweglichen drahtlosen Vorrichtung.

16. Die bewegliche drahtlose Vorrichtung nach Anspruch 10, wobei das Mittel zum drahtlosen Senden ferner arbeitet, um Toninformationen an die Fernüberwachungsstelle zu senden.

17. Eine Fernüberwachungsstelle (104) zum Bereitstellen von Fernüberwachung einer beweglichen drahtlosen Vorrichtung (102), umfassend:
erstes Mittel (312) zum Empfangen eines Ersuchens von der beweglichen drahtlosen Vorrichtung um Fernüberwachung der beweglichen drahtlosen Vorrichtung und
Mittel zum Feststellen von positionsbezogenen Informationen der beweglichen drahtlosen Vorrichtung,
**dadurch gekennzeichnet, dass** die Fernüberwachungsstelle ein zweites Mittel umfasst zum Steuern mindestens eines Umweltsensors (114) innerhalb eines Gebiets in der Nähe eines Standorts, der auf Grundlage der positionsbezogenen Informationen definiert wird, und zum Empfangen von Umweltinformationen von diesem, und
wobei der mindestens eine Umweltsensor auf Grundlage der positionsbezogenen Informationen ausgewählt wird.

18. Die Fernüberwachungsstelle nach Anspruch 17, die ein Mittel zum Zugreifen auf Grundlage des Ersuchens auf eine Registrierung (110) umfasst, die Informationen bezüglich des mindestens einen Umweltsensors umfasst, und der mindestens eine Umweltsensor wird ausgewählt auf Grundlage der Informationen bezüglich des mindestens einen Umweltsensors.

19. Die Fernüberwachungsstelle nach Anspruch 17, wobei das erste Mittel (308) zum Empfangen ferner arbeitet, um Toninformationen von der beweglichen drahtlosen Vorrichtung zu empfangen.

20. Die Fernüberwachungsstelle nach Anspruch 17, ferner umfassend:
Mittel (312) zum Senden von zumindest einem Teil der Umweltinformationen an die bewegliche drahtlose Vorrichtung.

21. Die Fernüberwachungsstelle nach Anspruch 17, ferner umfassend:
Mittel zum Senden von Toninformationen an die bewegliche drahtlose Vorrichtung.

22. Die Fernüberwachungsstelle nach Anspruch 17, ferner umfassend:
eine mit dem zweiten Mittel zum Empfangen verbundene Benutzeroberfläche zum Bereitstellen von Umweltinformationen an einen Benutzer der Fernüberwachungsstelle.

23. Die Fernüberwachungsstelle nach Anspruch 17, ferner umfassend:
Mittel zum Senden eines Alarmsignals an die bewegliche drahtlose Vorrichtung.

24. Verfahren für eine bewegliche drahtlose Vorrichtung (102) zum Unterstützen von Fernüberwachung der beweglichen drahtlosen Vorrichtung, wobei das Verfahren folgende Schritte umfasst:
Empfangen (602) eines Ersuchens um Fernüberwachung der der beweglichen drahtlosen Vorrichtung vom Benutzer der beweglichen drahtlosen Vorrichtung,
Bereitstellen (604) von positionsbezogenen Informationen der beweglichen drahtlosen Vorrichtung und
Senden (606) des Ersuchens und der positionsbezogenen Informationen an eine Femüberwachungsstelle,
**dadurch gekennzeichnet, dass** das Ersuchen einer Fernüberwachung durch mindestens einen von der Fernüberwachungsstelle (104) gesteuerten und innerhalb eines Gebiets in der Nähe der Position auf Grundlage der von der beweglichen drahtlosen Vorrichtung bereitgestellten positionsbezogenen Informationen ausgewählten Umweltsensor (114) gilt.

25. Das Verfahren nach Anspruch 24, ferner umfassend:
Bestimmen zusätzlicher Umweltinformationen über einen zusätzlichen Umweltsensor (218) und
Senden (610) der zusätzlichen Umweltinformationen an die Fernüberwachungsstelle.

26. Das Verfahren nach Anspruch 24, ferner umfassend:
Empfangen (608) zumindest eines Teils der Umweltinformationen von der Fernüberwachungsstelle und
Bereitstellen zumindest einen Teils der Umweltinformationen an einen Benutzer der beweglichen drahtlosen Vorrichtung.

27. Das Verfahren nach Anspruch 24, ferner umfassend:
Empfangen (612) von Toninformationen von der Fernüberwachungsstelle.

28. Das Verfahren nach Anspruch 24, ferner umfassend:
Empfangen (612) eines Alarmsignals von der Fernüberwachungsstelle und
Bereitstellen (616) von Anzeigen des Alarmsignals an den Benutzer der beweglichen drahtlosen Vorrichtung.

29. Das Verfahren nach Anspruch 24, ferner umfassend:
Senden (612) von Toninformationen an die Fernüberwachungsstelle.

30. Verfahren für eine Fernüberwachungsstelle (104) zum Bereitstellen von Fernüberwachung einer beweglichen drahtlosen Einrichtung (102), wobei das Verfahren umfasst:
Empfangen (702) eines Ersuchens um Fernüberwachung der beweglichen drahtlosen Vorrichtung von der beweglichen drahtlosen Vorrichtung und
Feststellen (704) von positionsbezogenen Informationen der beweglichen drahtlosen Vorrichtung
**dadurch gekennzeichnet, dass** das Verfahren das Auswählen eines von der Fernüberwachungsstelle gesteuerten Umweltsensors (114) innerhalb eines Gebiets in der Nähe der beweglichen drahtlosen Vorrichtung umfasst und
das Empfangen von Umweltinformationen auf Grundlage der positionsbezogenen Informationen von dem mindestens einen Umweltsensor.

31. Das Verfahren nach Anspruch 30, ferner umfassend:
auf Grundlage des Ersuchens Zugreifen (706) auf eine Registrierung (110), die Informationen bezüglich des mindestens einen Umweltsensors umfasst,
wobei der mindestens eine Umweltsensor auf Grundlage der positionsbezogenen Informationen und der Informationen bezüglich des mindestens einen Umweltsensors ausgewählt wird.

32. Das Verfahren nach Anspruch 30, ferner umfassend:
Empfangen (714) von Toninformationen von der beweglichen drahtlosen Vorrichtung.

33. Das Verfahren nach Anspruch 30, ferner umfassend:
Senden (710) von zumindest einem Teil der Umweltinformationen an die bewegliche drahtlose Vorrichtung.

34. Das Verfahren nach Anspruch 30, ferner umfassend:
Senden (714) von Toninformationen an die bewegliche drahtlose Vorrichtung.

35. Das Verfahren nach Anspruch 30, ferner umfassend:
Bereitstellen der Umweltinformation an den Benutzer der Fernüberwachungsstelle.

36. Das Verfahren nach Anspruch 30, ferner umfassend:
Senden (716) eines Alarmsignals an die bewegliche drahtlose Vorrichtung.

## Revendications

1. Système pour effectuer une surveillance à distance, comprenant :
au moins un dispositif mobile sans fil (102), dans lequel des informations liées à la position peuvent être déterminées pour chaque dispositif mobile sans fil de l'au moins un dispositif mobile sans fil et envoyées avec une demande de surveillance à distance à un poste de surveillance à distance (104) ;
un poste de surveillance à distance (104) en communication sans fil avec l'au moins un dispositif mobile sans fil, qui vérifie des informations liées à la position pour un dispositif mobile sans fil de l'au moins un dispositif mobile sans fil ; et
au moins un capteur de variable d'environnement (114),
**caractérisé en ce que** l'au moins un capteur de variable d'environnement est un capteur à distance qui est relié au poste de surveillance à distance et commandé par celui-ci et qui est sélectionné sur la base d'informations liées à la position fournies par le dispositif mobile sans fil, et **en ce qu'**il fournit en réponse à une demande provenant du poste de surveillance à distance, des informations d'environnement concernant une région proche d'un lieu sur la base des informations liées à la position.

2. Système selon la revendication 1, dans lequel le poste de surveillance à distance est relié à l'au moins un capteur de variable d'environnement par l'intermédiaire d'un réseau de communication (106).

3. Système selon la revendication 2, dans lequel le réseau de communication (106) comprend soit une toile mondiale (World Wide Web) soit l'Internet.

4. Système selon la revendication 1, dans lequel l'au moins un capteur de variable d'environnement (114) comprend au moins une caméra.

5. Système selon la revendication 1, dans lequel le dispositif mobile sans fil comprend un capteur de variable d'environnement supplémentaire qui fournit sans fil des informations d'environnement supplémentaires au poste de surveillance à distance.

6. Système selon la revendication 5, dans lequel le capteur de variable d'environnement supplémentaire comprend une caméra.

7. Système selon la revendication 1, dans lequel le dispositif mobile sans fil et le poste de surveillance à distance communiquent par l'intermédiaire d'au moins un canal audio (208, 308).

8. Système selon la revendication 1, dans lequel le poste de surveillance à distance fournit sans fil au moins une partie des informations d'environnement au dispositif mobile sans fil.

9. Système selon la revendication 1, comprenant en outre :
un registre (110), relié au poste de surveillance à distance, comprenant des informations concernant chacun de l'au moins un capteur de variable d'environnement,
dans lequel le poste de surveillance à distance sélectionne l'au moins un capteur de variable d'environnement (114) sur la base des informations concernant chacun de l'au moins un capteur de variable d'environnement.

10. Dispositif mobile sans fil (102) pouvant être utilisé pour effectuer une surveillance à distance, comprenant :
un moyen d'entrée (210) pour recevoir, d'un utilisateur du dispositif mobile sans fil, une demande de surveillance à distance du dispositif mobile sans fil ;
un moyen (214) pour fournir des informations liées à la position correspondant au dispositif mobile sans fil ; et
un moyen (212) relié au moyen d'entrée et au moyen de fourniture, pour envoyer sans fil la demande de surveillance à distance du dispositif mobile sans fil et les informations liées à la position à un poste de surveillance à distance (104),
**caractérisé en ce que** la demande est destinée à surveiller à distance le dispositif mobile sans fil par l'intermédiaire d'au moins un capteur de variable d'environnement (114) commandé par le poste de surveillance à distance et sélectionné à l'intérieur d'une région proche d'une position sur la base des informations liées à la position fournies par le dispositif mobile sans fil.

11. Dispositif mobile sans fil selon la revendication 10, comprenant en outre :
un moyen (218), relié au moyen d'envoi sans fil, pour déterminer des informations d'environnement supplémentaires,
dans lequel le moyen (212) d'envoi sans fil envoie les informations d'environnement au poste de surveillance à distance.

12. Dispositif mobile sans fil selon la revendication 11, dans lequel le moyen de détermination des informations d'environnement supplémentaires comprend une caméra.

13. Dispositif mobile sans fil selon la revendication 10, comprenant en outre :
un moyen (212) pour recevoir sans fil, du poste de surveillance à distance, au moins une partie des informations d'environnement ; et
un moyen, relié au moyen de réception sans fil, pour fournir l'au moins une partie des informations d'environnement à un utilisateur du dispositif mobile sans fil.

14. Dispositif mobile sans fil selon la revendication 13, dans lequel le moyen de réception sans fil a en outre pour fonction de recevoir des informations audio du poste de surveillance à distance.

15. Dispositif mobile sans fil selon la revendication 10, dans lequel le moyen de réception sans fil a en outre pour fonction de recevoir un signal d'alarme du poste de surveillance à distance et dans lequel le dispositif mobile sans fil comprend en outre :
un moyen de sortie (206, 208, 210), relié au moyen de réception sans fil, pour fournir des indices du signal d'alarme à un utilisateur du dispositif mobile sans fil.

16. Dispositif mobile sans fil selon la revendication 10, dans lequel le moyen d'envoi sans fil a en outre pour fonction d'envoyer des informations audio au poste de surveillance à distance.

17. Poste de surveillance à distance (104) pour permettre une surveillance à distance d'un dispositif mobile sans fil (102), comprenant :
un premier moyen (312) pour recevoir, du dispositif mobile sans fil, une demande de surveillance à distance du dispositif mobile sans fil ; et
un moyen pour vérifier les informations liées à la position du dispositif mobile sans fil ;
**caractérisé en ce que** le poste de surveillance à distance comporte un deuxième moyen pour commander au moins un capteur de variable d'environnement (114) à l'intérieur d'une région proche d'une position définie sur la base des informations liées à la position et pour recevoir de celui-ci des informations d'environnement ; et
dans lequel l'au moins un capteur de variable d'environnement est sélectionné sur la base des informations liées à la position.

18. Poste de surveillance à distance selon la revendication 17, comportant un moyen pour accéder, sur la base de la demande, à un registre (110) comprenant des informations concernant l'au moins un capteur de variable d'environnement, et
l'au moins un capteur de variable d'environnement est sélectionné sur la base des informations concernant l'au moins un capteur de variable d'environnement.

19. Poste de surveillance à distance selon la revendication 17, dans lequel le premier moyen (308) de réception a en outre pour fonction de recevoir des informations audio du dispositif mobile sans fil.

20. Poste de surveillance à distance selon la revendication 17, comprenant en outre :
un moyen (312) pour envoyer au moins une partie des informations d'environnement au dispositif mobile sans fil.

21. Poste de surveillance à distance selon la revendication 17, comprenant en outre :
un moyen pour envoyer des informations audio au dispositif mobile sans fil.

22. Poste de surveillance à distance selon la revendication 17, comprenant en outre :
une interface utilisateur, reliée au deuxième moyen de réception, pour fournir les informations d'environnement à un utilisateur du poste de surveillance à distance.

23. Poste de surveillance à distance selon la revendication 17, comprenant en outre :
un moyen pour envoyer un signal d'alarme au dispositif mobile sans fil.

24. Procédé, pour un dispositif mobile sans fil (102), pour prendre en charge la surveillance à distance du dispositif mobile sans fil, le procédé comprenant les étapes de :
réception (602), de l'utilisateur du dispositif mobile sans fil, d'une demande de surveillance à distance du dispositif mobile sans fil ;
fourniture (604) d'informations liées à la position du dispositif mobile sans fil ; et
envoi (606) de la demande et des informations liées à la position à un poste de surveillance à distance (104),
**caractérisé en ce que** la demande est destinée à effectuer la surveillance à distance à l'aide d'au moins un capteur de variable d'environnement (114) commandé par le poste de surveillance à distance (104) et sélectionné à l'intérieur d'une région proche de la position sur la base des informations liées à la position fournies par le dispositif mobile sans fil.

25. Procédé selon la revendication 24, comprenant en outre :
la détermination d'informations d'environnement supplémentaires par l'intermédiaire d'un capteur de variable d'environnement supplémentaire (218) ; et
l'envoi (610) des informations d'environnement supplémentaires au poste de surveillance à distance.

26. Procédé selon la revendication 24, comprenant en outre :
la réception (608), du poste de surveillance à distance, d'au moins une partie des informations d'environnement ; et
la fourniture de l'au moins une partie des informations d'environnement à un utilisateur du dispositif mobile sans fil.

27. Procédé selon la revendication 24, comprenant en outre :
la réception (612) d'informations audio du poste de surveillance à distance.

28. Procédé selon la revendication 24, comprenant en outre :
la réception (614) d'un signal d'alarme du poste de surveillance à distance ; et
la fourniture (616) d'indices du signal d'alarme à un utilisateur du dispositif mobile sans fil.

29. Procédé selon la revendication 24, comprenant en outre :
l'envoi (612) d'informations audio au poste de surveillance à distance.

30. Procédé, pour un poste de surveillance à distance (104), pour effectuer une surveillance à distance d'un dispositif mobile sans fil (102), le procédé comprenant :
la réception (702), du dispositif mobile sans fil, d'une demande de surveillance à distance du dispositif mobile sans fil ; et
la vérification (704) d'informations liées à la position du dispositif mobile sans fil ;
**caractérisé en ce que** le procédé comprend la sélection d'un capteur de variable d'environnement (114) commandé par le poste de surveillance à distance à l'intérieur d'une région proche du dispositif mobile sans fil ; et
la réception, en provenance d'au moins un capteur de variable d'environnement, d'informations d'environnement sur la base des informations liées à la position.

31. Procédé selon la revendication 30, comprenant en outre :
l'accès (706), sur la base de la demande, à un registre (110) comprenant des informations concernant l'au moins un capteur de variable d'environnement,
dans lequel l'au moins un capteur de variable d'environnement est sélectionné sur la base des informations liées à la position et des informations concernant l'au moins un capteur de variable d'environnement.

32. Procédé selon la revendication 30, comprenant en outre :
la réception (714) d'informations audio en provenance du dispositif mobile sans fil.

33. Procédé selon la revendication 30, comprenant en outre :
l'envoi (710) d'au moins une partie des informations d'environnement au dispositif mobile sans fil.

34. Procédé selon la revendication 30, comprenant en outre :
l'envoi (714) d'informations audio au dispositif mobile sans fil.

35. Procédé selon la revendication 30, comprenant en outre :
la fourniture des informations d'environnement à un utilisateur du poste de surveillance à distance.

36. Procédé selon la revendication 30, comprenant en outre :
l'envoi (716) d'un signal d'alarme au dispositif mobile sans fil.
